# EUROPÄISCHE PATENTANMELDUNG

(11) **EP 4 488 453 A1**
(43) Veröffentlichungstag der Anmeldung: **08.01.2025**
(21) Anmeldenummer: 24020223.4
(22) Anmeldetag: 03.07.2024
(51) Int. Cl.: E02F 5/08

(54) **VORRICHTUNG FÜR DAS VERLEGEN EINER LEITUNG IN EINER BODENFLÄCHE IM FREIEN**

(30) Priorität: 04.07.2023 AT 762023
(71) Anmelder: Pichler, Alois, 3341 Ybbsitz (AT)
(72) Erfinder: Pichler, Alois, 3341 Ybbsitz (AT); Pichler, Jan Michael, 3341 Ybbsitz (AT); Pichler, Lorenz, 3341 Ybbsitz (AT)

(57) **Zusammenfassung**

Die Erfindung betrifft eine Vorrichtung für das Verlegen einer Leitung in einer Bodenfläche im Freien, wobei die Vorrichtung einen Verlegekasten (2) und einen Fräser (1) mit Schabfortsätzen (5) aufweist, und dazu bestimmt ist, durch eine fahrbare Arbeitsmaschine gehalten und translatorisch entlang einer zu bildenden Leitungstrasse bewegt zu werden, wobei der Fräser (1) um seine im Wesentlichen vertikal ausgerichtete Rotationsachse (7) zu Rotation angetrieben ist, und Untergrundmaterial abträgt und verschiebt, und wobei durch den Verlegekasten (2) die zu verlegende Leitung durchgeführt wird.

Die Schabfortsätze (5) des Fräsers (1) sind derart ausgebildet und angeordnet, dass jener Anteil von abgetragenem Untergrundmaterial, welches im Kontakt mit den Schabfortsätzen (5) nach oben hin verschoben wird, nicht größer ist als jener Anteil von abgetragenem Untergrundmaterial, welches im Kontakt mit den Schabfortsätzen (5) nach unten hin verschoben wird.

## Beschreibung

Die Erfindung betrifft eine Vorrichtung für das Verlegen einer Leitung in einer Bodenfläche im Freien.

Mit dem Begriff "Leitung" sind in dieser Schrift Kabel zur Übertragung von elektrischer Energie, Kabel zur Übertragung von elektrischen Signalen, Glasfaserkabel sowie Schlauchleitungen für das Übertragen von Fluiden gleichermaßen gemeint.

Die DE 1201441 B zeigt schon 1965 eine Vorrichtung für das Verlegen eines Kabels im Erdreich. Die Vorrichtung besteht aus einer Pflugschar und einem schmalen Hohlkörper, welcher als Verlegekasten bezeichnet werden kann. Beim bestimmungsgemäßen Einsatz ragt die Pflugschar mit einer geraden Schneidkante vertikal in den Boden und sie wird mit vorne liegender Schneidkante gezogen. An der Hinterseite der Pflugschar ist der mit ihr verbundene Verlegekasten angeordnet, welcher hinter der Pflugschar in der durch die Pflugschar gebildeten Furche mitgezogen wird. Das zu verlegende Kabel wird durch eine obere Öffnung in den Verlegekasten eingeführt und verlässt diesen durch eine untere Öffnung am Grund der durch die Pflugschar gebildeten Furche. Im Verlegekasten und beim Verlassen des Verlegkastens wird das Kabel derart geführt, dass seine für den Verlegevorgang zwangsweise erforderliche Krümmung einen ausreichend großen Radius hat um Beschädigungen zu vermeiden.

Schon 1967 zeigt die FR 1503171 A eine Vorrichtung für das Verlegen eines Kabels im Erdreich welche gegenüber jener der DE 1201441 B dahingehend verändert ist, dass die Pflugschar durch einen Schaftfräser ersetzt ist, welcher mit Schabfortsätzen versehen ist, die in einer gewindeartig spiraligen Anordnung aneinander gereiht sind. Im Betrieb wird der Schaftfräser zu Drehung um seine Achse angetrieben und gleichzeitig linear entlang der zu bildenden Kabeltrasse bewegt. Der Drehsinn des Schaftfräsers ist dabei so ausgerichtet, dass abgeschabtes Untergrundmaterial durch die gewindeartig spiralige Anordnung der Schabfortsätze nach oben, also aus dem zu bildenden Graben hinaus gefördert wird. Bei entsprechend harter und robuster Auslegung der Schabfortsätze des Schaftfräsers ist die Vorrichtung dazu geeignet auch in steinigem oder asphaltiertem Untergrund voranzukommen und Kabel verlegen zu können.

In dieser Schrift wird das Wort "Fräser" für ein Werkzeug verwendet, welches angetrieben bewegt wird und in direktem Kontakt mit einem Gebilde Material von diesem Gebilde abträgt und das abgetragene Material von seiner ursprünglichen Position weg bewegt, unabhängig davon ob der Abtragungsvorgang im Detail beispielsweise ein Zerspanungsvorgang, ein Zersplitterungsvorgang, oder ein wie auch immer gearteter sonstiger Trennungsvorgang ist.

Die EP 2333164 B1 und die EP 3640402 B1 sind aktuellere Veröffentlichungen zu Vorrichtungen in der Art der FR 1503171 A. Auch bei diesen Vorrichtungen fördert ein Schaftfräser Material aus der zu bildenden Furche heraus und ein Verlegekasten wird hinter dem Schaftfräser nachgezogen. Verbesserungen gegenüber der FR 1503171 A betreffend die Möglichkeit engere Krümmungsradien der Kabeltrasse ausbilden zu können und die Möglichkeit eine von einer Spule abgewickelte Leitung gemeinsam mit einer schon abgewickelt angeordneten Leitung verlegen zu können.

Ein verbleibender Nachteil an den besprochenen, mit Schaftfräser arbeitenden Vorrichtung für das Verlegen von Leitungen im Untergrund ist, dass die vertikal übereinander liegenden Schichten des Untergrundmaterials durchmischt werden, weil das Untergrundmaterial durch den Schaftfräser erheblich nach oben gefördert wird. Das führt im Bereich von oberflächlich mit festeren Schichten ausgebildeten Untergründen zu erheblichen Nachteilen. Oftmals ist es deswegen erforderlich, einen Großteil des ursprünglich vorhandenen Untergrundmaterials gänzlich zu entfernen und durch separat herbeizuschaffendes, in homogenen Schichten anzuordnendes Material zu ersetzen.

Der Erfinder hat die sich Aufgabe gestellt, eine Vorrichtung für das Verlegen einer Leitung in einer Bodenfläche im Freien bereitzustellen, welche vergleichbar gut wie die bekannten besprochenen Vorrichtungen mit Schaftfräsern für das Verlegen in sehr hartem Untergrundmaterial geeignet ist, dabei jedoch im Wesentlichen ohne Durchmischung von übereinander angeordneten Schichten des Untergrundmaterials auskommt.

Für das Lösen der Aufgabe wird von den vorbesprochenen Bauweisen die Lehre übernommen, dass die Vorrichtung einen Fräser aufweist, welcher um eine im Wesentlichen vertikale Achse rotiert, welcher zusätzlich zu seiner Rotationsbewegung im Wesentlichen normal zu seiner Rotationsachse translatorisch entlang der zu bildenden Leitungstrasse durch das Untergrundmaterial bewegt wird, sowie einen Verlegekasten, welcher bei der translatorischen Bewegung in der zu bildenden Leitungstrasse hinter dem Fräser angeordnet ist. Wie bei vorbesprochenen Bauweisen auch, ist der Fräser dazu geformt, mit Schabfortsätzen ausgestattet, und angetrieben dass die Schabfortsätze Material vom Untergrund abtragen und von der ursprünglichen Position weg verschieben.

Als erfindungsgemäße Verbesserung wird vorgeschlagen, die Schabfortsätze des Fräsers derart auszubilden und anzuordnen, dass jener Anteil von abgetragenem Untergrundmaterial, welches im Kontakt mit den Schabfortsätzen nach oben hin verschoben wird, nicht größer ist als jener Anteil von abgetragenem Untergrundmaterial, welches im Kontakt mit den Schabfortsätzen nach unten hin verschoben wird. Als Konsequenz davon wird erreicht, dass durch die Schabfortsätze des Fräsers abgetragenes Untermaterial im Wesentlichen nur in Umfangsrichtung der Rotationsbewegung des Fräsers verschoben wird, womit es so gut wie gar nicht zu einer Durchmischung von vertikal übereinander liegenden Schichten von Untergrundmaterial kommt.

Entgegen der spontanen Vorstellung hat die Praxis gezeigt, dass es gar nicht nötig ist Untergrundmaterial aus der zu bildenden Leitungstrasse heraus zu fördern um eine Furche zu bilden in welcher der Verlegekasten, welcher die zu verlegende Leitung führt, gezogen werden kann. Es ist hingegen schon ausreichend, das Untergrundmaterial durch den Fräser von einem kompakten Zustand in einen granularen Zustand überzuführen um den Verlegekasten durchführen zu können.

Die Erfindung wird an Hand von stark stilisierten Zeichnungen veranschaulicht:
Fig. 1: zeigt die für das Verständnis des Erfindungsgedankens wesentlichen Teile einer beispielhaften erfindungsgemäßen Vorrichtung in Seitenansicht.
Fig. 2: zeigt die Vorrichtung von Fig. 1 in Schnittansicht mit Blickrichtung von oben.

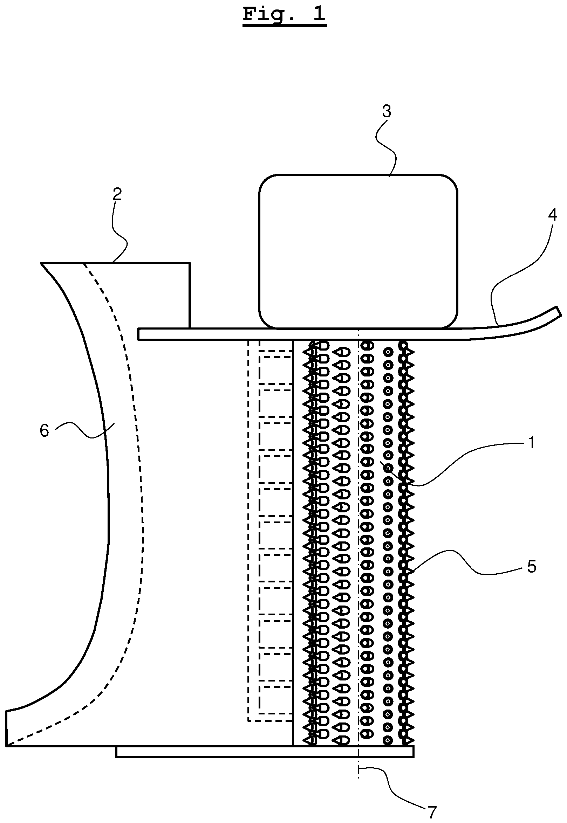

Die in Fig. 1 skizzierten, unumgänglich notwendigen Teile einer erfindungsgemäßen Vorrichtung sind ein Fräser 1, ein Verlegekasten 2 und ein Antrieb 3, welcher die Rotationsbewegung des Fräsers 1 antreibt. Unumgänglich notwendig ist natürlich auch eine Rahmenkonstruktion, durch welchen die genannten Teile gehalten sind, und welche ihrerseits durch eine fahrbare Arbeitsmaschine zu halten und zu bewegen ist. Es ist sehr vorteilhaft, aber nicht zwangsweise notwendig, an der Vorrichtung auch eine Kufe 4 vorzusehen, welche oberhalb des Fräsers 1 angeordnet ist.

Die erfindungsgemäße Vorrichtung ist in einigen Aspekten mit vergleichbaren Vorrichtungen gemäß dem Stand der Technik gleich. Diese Aspekte werden im Folgenden nur kurz erwähnt und nicht im Detail erörtert, da sie der Fachwelt ohnedies schon bekannt sind:
- Die Vorrichtung wird im Betrieb durch eine fahrbare Arbeitsmaschine gehalten, translatorisch entlang der zu bildenden Leitungstrasse bewegt, und mit Energie für den Antrieb 3 versorgt.
- Der Fräser 1 hat die äußere Gestalt eines Rotationskörpers, wobei die Schabfortsätze 5 des Fräsers an der Mantelfläche des Rotationskörpers angeordnet sind. Im Betrieb ragt der Fräser 1 mit etwa vertikal ausgerichteter Achse, welche auch seine Rotationsachse 7 ist, so tief in das Material des Untergrundes, wie die Leitung zu verlegen ist, und er trägt mit seiner bei der translatorischen Bewegung jeweils vorne liegenden Mantelflächenseite Untergrundmaterial ab.
- Im Betrieb liegt der Verlegekasten 2 bezüglich der translatorischen Bewegung der Vorrichtung hinter dem Fräser 1. Die zu verlegende Leitung wird von oben nach unten durch einen Führungskanal 6 im Verlegekasten durch in jene Position im Untergrund geführt, in welcher sie dauerhaft liegen bleiben soll.

Gemäß dem Erfindungsgedanken sind die Schabfortsätze 5 des Fräsers 1 derart ausgebildet und angeordnet, dass die Summe ihrer unmittelbaren Wirkungen auf das durch sie abgetragene Untergrundmaterial kein Anheben des Untergrundmaterials bedeutet. Im dargestellten beispielhaften Fall wird das durch zwei Maßnahmen erreicht.

Zum Einen sind die Schabfortsätze 5 - welche üblicherweise aus einem Material bestehen das härter und abriebfester als Stahl ist - als gerade Kegeln ausgebildet, deren Achsen normal zur Rotationsachse 7 des Fräsers 1 liegen. Dadurch neigt jeder Schabfortsatz 5 für sich allein dazu, von dem mit ihm ihn Kontakt kommenden Untergrundmaterial gleich viel nach oben hin wie nach unten hin zu verdrängen.

Etwas verallgemeinert kann gesagt werden, dass jeder einzelne der Schabfortsätze 5 bezüglich jeweils einer zur Rotationsachse 7 des Fräsers 1 normal liegenden Ebene spiegelsymmetrisch ausgebildet und angeordnet ist.

Zum Zweiten sind die Schabfortsätze 5 in Reihen angeordnet, welche in Ebenen liegen, welche parallel zur Rotationsachse 7 des Fräsers ausgerichtet sind. Dabei liegen von einem ersten Schabfortsatz 5 in einer ersten Reihe von Schabfortsätzen ausgehend, die nächstliegenden beiden Schabfortsätze 5 in der entgegen dem Drehsinn des Fräsers 1 nächstliegenden Reihe von Schabfortsätzen 5, spiegelbildlich zueinander bezüglich einer Ebene die durch den ersten Schabfortsatz 5 verläuft und normal zur Rotationsachse 7 des Fräsers 1 ausgerichtet ist. Durch diese Anordnung wird im Betrieb des Fräsers 1 vermieden, dass abgeschabtes Untergrundmaterial nach Art einer Förderschnecke angehoben wird.

Etwas verallgemeinert kann gesagt werden, dass die Anordnung der Menge der Schabfortsätze 5 bezüglich einer zur Rotationsachse 7 des Fräsers 1 normal liegenden Ebene spiegelsymmetrisch ausgebildet ist.

Im Rahmen des Erfindungsgedankens gibt es noch einige weitere Möglichkeiten um zu erreichen, dass abgeschabtes Untergrundmaterial nicht nach oben hin gefördert wird. Beispielsweise können die Schabfortsätze mit linienartigen Schneidkanten ausgebildet sein, wobei die Schneidkanten parallel zur Rotationsachse des Fräsers 1 ausgerichtet sind.

Die Schneidkanten der Schabfortsätze können auch linear ausgeführt und so ausgerichtet sein, dass ihr oberes Ende in Umfangsrichtung der Drehbewegung des Fräsers 1 weiter vorne liegt als das untere Ende. Dadurch ergibt sich eine leichte Verdrängungswirkung von abgeschabtem Material nach unten hin. Zu einer störenden Durchmischung von abgeschabtem Untergrundmaterial führt das im Allgemeinen aber nicht, da das verschiebbare Material ja durch festes Material unterhalb des Fräsers 1 an Bewegung nach unten hin gehindert wird.

Ebenso ist es beispielsweise möglich, die Schabfortsätze nach Art vieler paralleler Gewindegänge spiralig um den Umfang des Fräsers 1 anzuordnen, wobei ein entgegen der Drehrichtung des Fräsers 1 auf einen ersten Schabfortsatz 5 nächstfolgender zweiter Schabfortsatz 5 weniger weit unterhalb des ersten Schabfortsatzes liegt als der nächst oberhalb dieses zweiten Schabforstsatzes liegende dritte Schabfortsatz oberhalb des ersten Schabfortsatzes liegt. Damit ist im Betrieb durch die Schabfortsätze eine Förderwirkung nach Art eines Schneckenförderers nach unten hin erreichbar. Zu einer störenden Durchmischung von abgeschabtem Untergrundmaterial führt das im Allgemeinen aber wiederum nicht, da das verschiebbare Material ja durch festes Material unterhalb des Fräsers 1 an Bewegung nach unten hin gehindert wird.

Für eine optimale Betriebsweise ist es wichtig, dass die Umfangsgeschwindigkeit des Fräsers 1 vielfach höher ist als die Geschwindigkeit der translatorischen Fortbewegung der Vorrichtung. Das optimale Verhältnis zwischen diesen beiden Geschwindigkeiten hängt davon ab, welche Schichtdicke bei einer Umdrehung des Fräsers 1 abgetragen wird - und ist damit von den Materialeigenschaften des Untergrundmaterials abhängig. Es wird am besten im Einsatzfall empirisch ermittelt.

Bei der dargestellten Bauweise wird eine Kufe 4 verwendet, welche ein starres flächiges Gebilde ist, welches mit seiner Unterseite oberhalb des Fräsers 1 an der Oberfläche des Untergrundes in welchem die Leitung zu verlegen ist, aufliegt und sich dabei bezüglich der Rotationsachse des Fräsers 1 radial weiter nach außen erstreckt als der Fräser 1. Die Kufe 4 verhindert sehr zuverlässig, dass sich Untergrundmaterial, welches durch den Fräser 1 vom festen Untergrund abgeschabt wurde, über die ursprüngliche Oberfläche des Untergrundes hinaus nach oben bewegt.

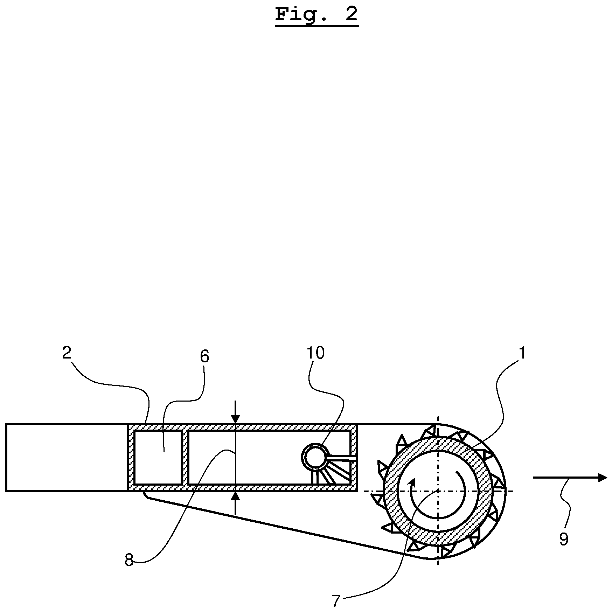

An Hand von Fig. 2 werden weitere vorteilhafte optionale Merkmale der Erfindung verdeutlicht:
Es ist vorteilhaft, jene Abmessung 8 des Verlegkastens 2, welche normal zur translatorischen Fortbewegungsrichtung 9 und zur Rotationsachse 7 des Fräsers 1 liegt, deutlich kleiner auszubilden als den Durchmesser des Fräsers 1, beispielsweise halb so groß. Desto schmäler diese Abmessung 8 ist, desto leichter kann der Verlegekasten 2 durch das vom Fräser abgeschabte Untergrundmaterial durchbewegt werden. Grenzen ergeben sich weil der Verlegkasten 2 eine Mindestbreite haben muss damit die zu verlegende Leitung durchgeführt werden kann, und weil mit steigendem Durchmesser des Fräsers 1 die auch die Breite der Leitungstrasse, die Masse an abzuschabendem Untergrundmaterial und der Energieaufwand für das Fräsen steigen.

Weiter bevorzugt befindet sich der Verlegkasten 2 nicht zentral hinter dem Fräser 1, sondern hinter jener seitlichen Hälfte des Fräsers 1, an welcher die Rotationsbewegung der Schabfortsätze 5 eine Bewegungskomponente in Richtung der translatorischen Fortbewegungsrichtung 9 haben. Durch diese seitliche Verschiebung wird Platz gemacht damit abgeschabtes Untergrundmaterial kaum umgelenkt werden muss, damit der Verlegekasten 2 durch dieses hindurchgleiten kann.

Weiters ist es sehr vorteilhaft, bezüglich der translatorischen Fortbewegungsrichtung 9 hinter dem Fräser 1 eine Spülvorrichtung 10 vorzusehen, welche Flüssigkeit in Richtung auf die Schabfortsätze 5 des Fräsers 1 ausgibt, und/oder auf jene Seite des Verlegekastens 2 hin ausgibt, an welcher abgeschabtes Untergrundmaterial abgleiten muss. Die Flüssigkeit ist typischerweise eine solche, welche auch zum Einsatz kommt um Material aus Erdbohrlöchern abzutransportieren. Typischerweise besteht eine derartige Flüssigkeit aus Wasser und einem sogenannten Transportzusatz, beispielsweise einem wasserlöslichen umweltverträglichen Polymer und/oder Bentonit.

Durch das Spülen werden die Vorteile erzielt, dass der Fräser 1 gekühlt wird, dass das Gleiten des Verlegekastens 2 in abgeschabtem Untergrundmaterial erleichtert wird, dass Staub- und Lärmentwicklung vermindert wird, und dass granular vorliegendes Untergrundmaterial weniger stark zum Expandieren neigt.

Gemäß einer weiteren optionalen vorteilhaften Weiterentwicklung wird der Fräser 1 gegenüber anderen Teilen der Vorrichtung nicht nur rotierend bewegt, sondern auch rüttelnd bewegt. Diese rüttelnde Bewegung kann ein schwingendes Bewegen in Axialrichtung des Fräsers 1 sein und/oder ein schwingendes Bewegen in einer oder mehreren Richtungen die normal zur Axialrichtung des Fräsers 1 liegen. Durch die rüttelnde Bewegung wird - vor allem bei sprödem mineralischem Untergrundmaterial - die Abtragungsleistung des Fräsers 1 erhöht, und es kommt weniger leicht zu störenden Anhaftungen am Fräser 1. Das Ausmaß der vorteilhaften Effekte der rüttelnden Bewegung ist von der Art des Untergrundmaterials abhängig.

Mit Hilfe der erfindungsgemäßen Vorrichtung wird das Verlegen von Leitungen im Außenbereich mit deutlich weniger Arbeitsaufwand und Eingriffen als bisher möglich.

## Patentansprüche

1. Vorrichtung für das Verlegen einer Leitung in einer Bodenfläche im Freien, wobei die Vorrichtung einen Verlegekasten (2) und einen Fräser (1) mit Schabfortsätzen (5) aufweist, und dazu bestimmt ist, durch eine fahrbare Arbeitsmaschine gehalten und translatorisch entlang einer zu bildenden Leitungstrasse bewegt zu werden, wobei der Fräser (1) um seine im Wesentlichen vertikal ausgerichtete Rotationsachse (7) zu Rotation angetrieben ist, und Untergrundmaterial abträgt und verschiebt, und wobei durch den Verlegekasten (2) die zu verlegende Leitung durchgeführt wird,
**dadurch gekennzeichnet, dass**
die Schabfortsätze (5) des Fräsers (1) derart ausgebildet und angeordnet sind, dass jener Anteil von abgetragenem Untergrundmaterial, welches im Kontakt mit den Schabfortsätzen (5) nach oben hin verschoben wird, nicht größer ist als jener Anteil von abgetragenem Untergrundmaterial, welches im Kontakt mit den Schabfortsätzen (5) nach unten hin verschoben wird.

2. Vorrichtung nach Anspruch 1, **dadurch gekennzeichnet, dass** die einzelnen Schabfortsätze 5 bezüglich einer zur Rotationsachse 7 des Fräsers 1 normal liegenden Ebene spiegelsymmetrisch ausgebildet und angeordnet sind.

3. Vorrichtung nach Anspruch 1 oder 2, **dadurch gekennzeichnet, dass** die Gesamtanordnung der Schabfortsätze 5 bezüglich einer zur Rotationsachse 7 des Fräsers 1 normal liegenden Ebene spiegelsymmetrisch ausgebildet ist.

4. Vorrichtung nach Anspruch 1 oder Anspruch 3, **dadurch gekennzeichnet, dass** die Schabfortsätze linienartigen Schneidkanten aufweisen, wobei das oberen Ende der Schneidkante in Umfangsrichtung der Drehbewegung des Fräsers weiter vorne liegt als das untere Ende.

5. Vorrichtung nach Anspruch 1 oder 2, **dadurch gekennzeichnet, dass** die Schabfortsätze entlang denkbarer, zueinander paralleler Gewindespiralen um den Umfang des Fräsers (1) herum gereiht sind, wobei ein entgegen der Drehrichtung des Fräsers (1) auf einen ersten Schabfortsatz nächstfolgender zweiter Schabfortsatz weniger weit unterhalb des ersten Schabfortsatzes liegt als der nächst oberhalb dieses zweiten Schabforstsatzes liegende dritte Schabfortsatz oberhalb des ersten Schabfortsatzes liegt.

6. Vorrichtung nach einem der Ansprüche 1 bis 5, **dadurch gekennzeichnet, dass** sie eine Kufe (4) aufweist, welche ein starres flächiges Gebilde ist, welches oberhalb des Fräsers (1) angeordnet ist, und sich bezüglich der Rotationsachse des Fräsers (1) radial weiter nach außen erstreckt als der Fräser (1), und welches dazu bestimmt ist, mit seiner Unterseite oberhalb des Fräsers (1) an der Oberfläche des Untergrundes in welchem die Leitung zu verlegen ist, aufzuliegen.

7. Vorrichtung nach einem der Ansprüche 1 bis 6, **dadurch gekennzeichnet, dass** jene Abmessung (8) des Verlegkastens (2), welche normal zur translatorischen Fortbewegungsrichtung (9) und zur Rotationsachse (7) des Fräsers (1) liegt, deutlich kleiner ist der Durchmesser des Fräsers (1), und dass sich der Verlegekasten (2) überwiegend hinter jener seitlichen Hälfte des Fräsers (1) befindet, an welcher die Rotationsbewegung der Schabfortsätze (5) eine Bewegungskomponente in Richtung der translatorischen Fortbewegungsrichtung (9) der Vorrichtung haben.

8. Vorrichtung nach einem der Ansprüche 1 bis 7, **dadurch gekennzeichnet, dass** sie eine Spülvorrichtung (10) aufweist, welche Flüssigkeit in Richtung auf die Schabfortsätze (5) des Fräsers 1 ausgibt, und/oder auf jene Seite des Verlegekastens (2) hin ausgibt, an welcher abgeschabtes Untergrundmaterial abgleiten muss.

9. Vorrichtung nach einem der Ansprüche 1 bis 9, **dadurch gekennzeichnet, dass** der Fräser (1) gegenüber anderen Teilen der Vorrichtung zu rüttelnder Bewegung antreibbar ist.
